# EUROPEAN PATENT APPLICATION

(11) **EP 4 693 848 A1**
(43) Date of publication of application: **11.02.2026**
(21) Application number: 24831311.6
(22) Date of filing: 08.02.2024
(51) Int. Cl.: H02K 15/12, H02K 3/34

(54) **MOTOR PRODUCTION METHOD AND MOTOR**

(30) Priority: 26.06.2023 JP 2023104032
(71) Applicant: IHI Corporation, Tokyo 135-8710 (JP)
(72) Inventor: IIJIMA, Kai, Tokyo 135-8710 (JP); INOMATA, Tatsumi, Tokyo 135-8710 (JP); FUKUI, Tatsuya, Tokyo 135-8710 (JP)
(74) Representative: TBK
(86) International application number: PCT/JP2024/004409
(87) International publication number: WO 2025/004431

(57) **Abstract**

Provided is a method for manufacturing a motor including an attachment step of attaching, to a housing accommodating a motor stator around which a coil is wound, an end plate provided with a first end plate through-hole and a second end plate through-hole, a first injection step of injecting, after the attachment step, uncured resin into a motor rotor arrangement region of the housing accommodating the motor stator through the first end plate through-hole, and a second injection step of injecting the uncured resin into the motor rotor arrangement region of the housing through the second end plate through-hole.

## Description

### Technical Field

The present disclosure relates to a method for manufacturing a motor and a motor.

### Background Art

A motor includes a rotor which is a rotating body and a stator disposed around the rotor. The stator includes a core and a coil wound around the core. The stator is encapsulated by resin for waterproofing and rust prevention regarding the coil which is a conductor. Disclosed in Patent Literature 1, Patent Literature 2, and Patent Literature 3, are techniques related to motors. For example, disclosed in Patent Literature 1 is a method for manufacturing a PM motor. In the production method disclosed in Patent Literature 1, a coil is disposed on an inner diameter side of a stator core and then resin is injected in through a mold injecting port. Thereafter, the injected resin is cured by being heated or the like so that a mold resin layer covering the stator core and the coil is formed. Disclosed in Patent Literature 2 and Patent Literature 3 are techniques of fixing a magnet with resin.

### Citation List

### Patent Literature

[Patent Literature 1] Japanese Unexamined Patent Publication No. 2022-184651
[Patent Literature 2] Japanese Unexamined Patent Publication No. 2018-130026
[Patent Literature 3] International Publication No. WO2021/200817

### Summary of Invention

### Technical Problem

In recent years, techniques for improving the output of a motor have been studied. In a case where the output of a motor is to be improved, a larger current is applied to a coil. As a result, the amount of heat generated by the coil increases and thus cooling the coil is important. Therefore, it has been considered to use resin, which is for waterproofing and rust prevention regarding the coil, as a heat path for extraction of heat from the coil.

Generally, resin having a high thermal conductivity has a high viscosity in an uncured state. In a case where uncured resin is injected into a configuration in which a stator is disposed in a housing, it takes a long time for the resin to reach throughout a gap. In addition, in a case where resin having a short pot life is used, the resin may be cured before filling is completed.

In order to use the resin as a heat path, it is desirable for the resin to be in contact with both the coil and the housing that accommodates the coil. This is because, even if the resin is in contact with the coil, if it is not in contact with the housing, a gap between the resin and the housing serves as a thermal resistance. As a result, the resin will not function sufficiently as a heat path.

The present disclosure provides a method for manufacturing a motor that is capable of easily releasing heat to the outside and can be manufactured in a short time, and provides a motor that is capable of easily releasing heat to the outside.

### Solution to Problem

According to an aspect of the present disclosure, there is provided a method for manufacturing a motor including an attachment step of attaching, to a housing accommodating a stator around which a coil is wound, an end plate provided with a first end plate through-hole and a second end plate through-hole, a first injection step of injecting, after the attachment step, uncured resin into a stator arrangement region of the housing accommodating the stator through the first end plate through-hole through which a first portion of the coil is visually observable from an outside of the housing, and a second injection step of injecting the uncured resin into the stator arrangement region of the housing through the second end plate through-hole through which a second portion of the coil, which is different from the first portion, is visually observable from the outside of the housing.

In the case of the method for manufacturing a motor according to the aspect, the uncured resin is injected after the end plate is attached. Then, the uncured resin is injected into the stator arrangement region by the step of injecting the uncured resin through the first end plate through-hole and the step of injecting the uncured resin through the second end plate through-hole different from the first end plate through-hole. In this case, a time required for the uncured resin to reach throughout the stator arrangement region can be shortened in comparison with a case where the uncured resin is injected at one position. Therefore, even in the case of a high-viscosity resin having high thermal conductivity, the time required to reach throughout the stator arrangement region can be shortened. As a result, a motor from which heat is easily released to the outside can be produced in a short time.

In the method for manufacturing a motor according to the aspect, the first injection step and the second injection step may be repeated so that the uncured resin is exposed through at least one of the first end plate through-hole and the second end plate through-hole. When the uncured resin is in a state of being exposed through at least one of the first end plate through-hole and the second end plate through-hole, the uncured resin is in a state of being in contact with the rear surface of the end plate. Therefore, it is possible to reliably form a path for transfer of heat from the coil to the end plate via the resin.

According to another aspect of the present disclosure, there is provided a method for manufacturing a motor including an injection step of injecting, through an opening of a housing accommodating a stator around which a coil is wound, uncured resin into a plurality of different portions in a stator arrangement region of the housing and an attachment step of attaching an end plate provided with a first end plate through-hole and a second end plate through-hole after the injection step. In the step of attaching the end plate, the end plate is pressed against a liquid surface of the uncured resin so that the uncured resin is exposed through the first end plate through-hole and/or the second end plate through-hole.

In the method for manufacturing a motor according to the other aspect, the uncured resin is injected into the stator arrangement region at a plurality of positions different from each other. Therefore, a time required for the uncured resin to reach throughout the stator arrangement region can be shortened in comparison with a case where the uncured resin is injected at one position. In addition, the end plate is attached after the uncured resin is injected. When the end plate is attached, the end plate is pressed against the liquid surface of the uncured resin so that the uncured resin is exposed through the first end plate through-hole and/or the second end plate through-hole. The uncured resin exposed through the first end plate through-hole and/or the second end plate through-hole due to the pressing of the end plate means that the rear surface of the end plate is in contact with the uncured resin. Therefore, a motor from which heat is easily released to the outside can be produced in a short time.

In the method for manufacturing a motor according to the other aspect, in the injection step, the uncured resin may be continuously injected while the housing and a device supplying the uncured resin are being relatively rotated around an axis of the housing. According to such a step as well, a time required for the uncured resin to reach throughout the stator arrangement region can be shortened.

In the method for manufacturing a motor according to the other aspect, the injection step may include a step of injecting a predetermined amount of the uncured resin into a first portion of the coil, and a step of injecting a predetermined amount of the uncured resin into a second portion of the coil, which is different from the first portion. According to such a step as well, a time required for the uncured resin to reach throughout the stator arrangement region can be shortened.

According to still another aspect of the present disclosure, there is provided a motor including a stator around which a coil is wound, a rotor enclosed by the stator and rotating together with a shaft, a housing which receives the stator and the rotor through a housing opening and forms a stator arrangement region for accommodating the received stator, an end plate attached to the housing opening, and a resin part filled in the stator arrangement region. The resin part is in contact with the coil and is in contact with the end plate. The end plate includes a plurality of end plate through-holes through which the resin part is exposed.

The resin part of the motor according to another aspect is in contact with the coil and is in contact with the end plate. According to such a configuration, it is possible to reliably form a path for transfer of heat from the coil to the end plate via the resin. As a result, heat can be preferably released to the outside.

In the motor according to another aspect, an exposed surface of the resin part exposed through the end plate through-holes may be positioned between an opening edge on an end plate rear surface side and an opening edge on an end plate main surface side. According to such a configuration, it is possible to achieve a structure in which the resin part is reliably in contact with the end plate rear surface.

In the motor according to the other aspect, the end plate may include an annular inner peripheral cylindrical portion including an end plate shaft insertion hole through which the shaft is inserted, an annular outer peripheral cylindrical portion surrounding the inner peripheral cylindrical portion in a circumferential direction and having an inner diameter larger than an outer diameter of the inner peripheral cylindrical portion, and a plurality of connecting portions disposed at intervals around an axis of the shaft to connect an outer peripheral surface of the inner peripheral cylindrical portion to an inner peripheral surface of the outer peripheral cylindrical portion. The end plate through-hole may be a region interposed between a pair of the connecting portions adjacent to each other around the axis of the shaft. An end surface of the inner peripheral cylindrical portion may protrude from the connecting portions along an axial direction of the shaft. According to such a structure, it is possible to suppress adhesion of the uncured resin to the end surface of the inner peripheral cylindrical portion and thus it is possible to use the end surface of the inner peripheral cylindrical portion as an installation surface for a component.

### Effects of Invention

According to the method for manufacturing a motor of the present disclosure, a motor from which heat is easily released to the outside can be produced in a short time. According to the motor of the present disclosure, heat can be preferably released to the outside.

### Brief Description of Drawings

FIG. 1 is a cross-sectional view showing the structure of a motor of the present disclosure.
FIG. 2 is a cross-sectional perspective view showing a main part of an end plate that the motor shown in FIG. 1 includes.
FIG. 3 is a front view of the motor shown in FIG. 1.
FIG. 4(a) is a cross-sectional view showing an example of a resin part exposed surface and FIG. 4(b) is a cross-sectional view showing another example of the resin part exposed surface.
FIG. 5 is a flowchart of a first method for manufacturing a motor.
FIG. 6(a) is a view showing a step of accommodating a motor assembly into a vacuum chamber and FIG. 6(b) is a view showing a step of injecting uncured resin through a first end plate through-hole.
FIG. 7(a) is a view showing a step of injecting uncured resin through a second end plate through-hole and FIG. 7(b) is a view showing a state where it has been determined that the resin part exposed surface of an uncured resin material has reached a prescribed position.
FIG. 8 is a flowchart of a second method for manufacturing a motor.
FIG. 9 is a view showing examples of a first portion, a second portion, and a third portion.

### Description of Embodiments

Hereinafter, an embodiment of the present invention will be described in detail with reference to the accompanying drawings. In the description of the drawings, the same elements will be given the same reference numerals and repetitive description will be omitted.

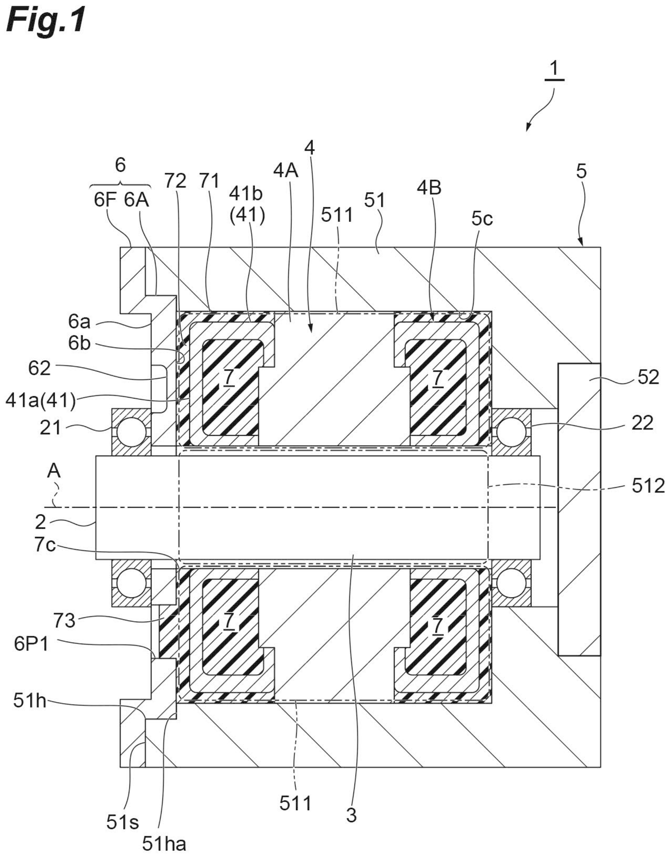

FIG. 1 is a cross-sectional view showing the structure of a motor 1 of the present disclosure. The motor 1 is used, for example, in a supercharger for a vehicle. The motor 1 applies torque to a shaft 2 to compensate for insufficient torque in a case where the torque of the shaft 2 is insufficient like when the vehicle is accelerated. In this case, an impeller (not shown) is attached to an end of the shaft 2.

The motor 1 is, for example, a brushless alternating current motor. The motor 1 includes the shaft 2, a motor rotor 3, a motor stator 4, a housing 5, and an end plate 6. A battery of the vehicle can be used as a drive source of the motor 1. At the time of deceleration of the vehicle, the motor 1 may perform regenerative power generation by using rotational energy of the motor rotor 3. The motor 1 can cope with high-speed rotation (for example, 100,000 to 200,000 rpm) of the shaft 2.

The motor rotor 3, which is a so-called rotor, is disposed between a pair of bearings 21 and 22 provided along a direction along an axis A. A main element constituting the motor rotor 3 is a cylindrical magnet. As necessary, the motor rotor 3 may include an element for transmitting, to the shaft 2, torque acting on the magnet. For example, the motor rotor 3 may include end rings disposed at both ends of the cylindrical magnet or an armoring and the like covering an outer peripheral surface of the magnet, as necessary.

The motor stator 4, which is a so-called stator, is accommodated in the housing 5. The motor stator 4 is disposed to surround the motor rotor 3 in a circumferential direction. The motor stator 4 includes a core 4A and a coil 4B. As a result of supply of a current to the coil 4B, the coil 4B generates a magnetic field. A force in the circumferential direction acts on the magnet of the motor rotor 3 due to the magnetic field. As a result, torque is applied to the shaft 2.

The housing 5 forms a region in which the motor rotor 3 and the motor stator 4 are accommodated. The housing 5, which is a tubular member, includes a tubular portion 51 and a bottom 52. One end of the housing 5 in a direction, in which the axis of the shaft 2 extends, is open so that components such as the motor rotor 3 and the motor stator 4 are accommodated. The housing 5 includes a housing opening 51h. The housing 5 includes structures for exhibiting a function of the motor 1, such as an electrode portion for applying a current to the coil 4B. However, the details of the structures are not shown in FIG. 1 and the like and the detailed description will be omitted in the description of the embodiment.

A motor stator arrangement region 511 (a stator arrangement region) and a motor rotor arrangement region 512 are formed in the housing 5. The motor stator arrangement region 511 is a region enclosed by the tubular portion 51. The motor stator 4 having a cylindrical shape is fixed to a tubular portion inner peripheral surface.

The housing opening 51h is blocked by the end plate 6. The expression "to close off" means to maintain the positions of constituent components accommodated in the housing 5. The end plate 6 having a disk-like shape is fixed to an end of the housing 5. The bearing 21 is fixed to the end plate 6.

### <End Plate>

The shape of the end plate 6 will be described in more detail. The shape of the end plate 6 is substantially a disk. The end plate 6 includes an end plate main body 6A and an end plate flange 6F. The end plate main body 6A is fitted into an opening recess 51ha of the housing 5. The end plate flange 6F abuts a housing opening end surface 51s. The end plate flange 6F is provided with several bolt through-holes (not shown). Bolts inserted into the bolt through-holes are screwed into screw holes provided at the housing opening end surface 51s. As a result, the end plate 6 is fixed to the housing 5.

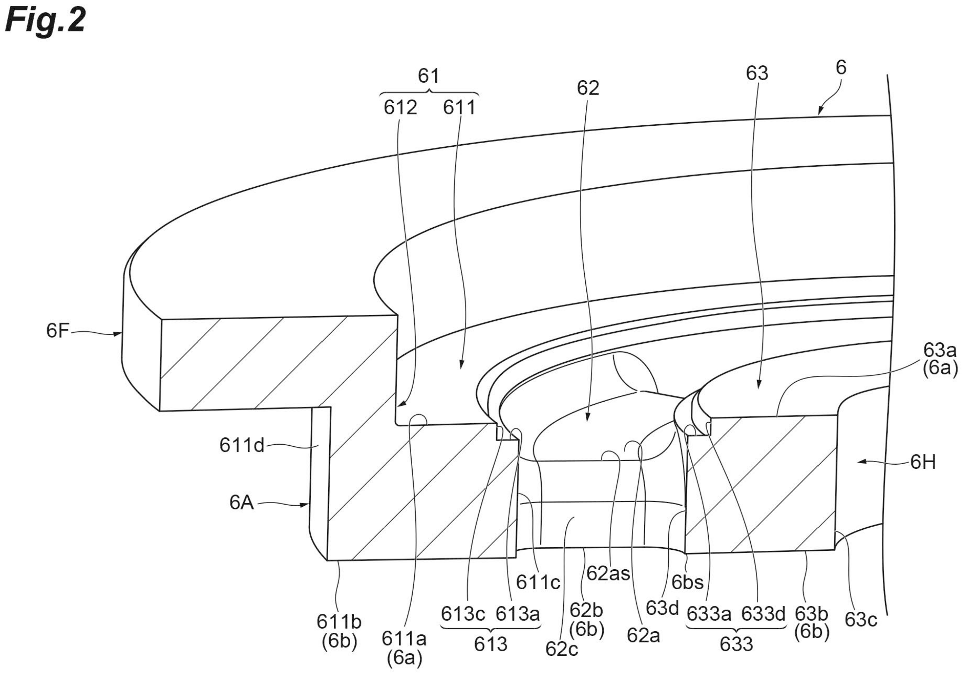

As shown in FIG. 2, the end plate main body 6A includes an outer peripheral cylindrical portion 61, spokes 62 (connecting portions), and an inner peripheral cylindrical portion 63. The outer peripheral cylindrical portion 61 is a portion integrated with the end plate flange 6F described above. The outer peripheral cylindrical portion 61 includes an outer peripheral annular portion 611 and an outer peripheral upright portion 612. The outer peripheral upright portion 612 extends upright along the direction along the axis A from an outer peripheral annular portion main surface 611a of the outer peripheral annular portion 611. The end plate flange 6F extends in a radial direction from an outer peripheral upright portion outer peripheral surface 611d. The outer peripheral annular portion main surface 611a functions as an installation surface for mounting of another device to the motor 1. The outer peripheral annular portion main surface 611a may be defined as a part of an end plate main surface 6a.

An outer peripheral step portion 613 is formed at a corner portion between the outer peripheral annular portion main surface 611a and an outer peripheral annular portion inner peripheral surface 611c. The outer peripheral step portion 613 includes an outer peripheral step main surface 613a and an outer peripheral step inner peripheral surface 613c. The outer peripheral step main surface 613a is at a position recessed from the outer peripheral annular portion main surface 611a. The inner diameter of the outer peripheral step inner peripheral surface 613c is larger than that of the outer peripheral annular portion inner peripheral surface 611c.

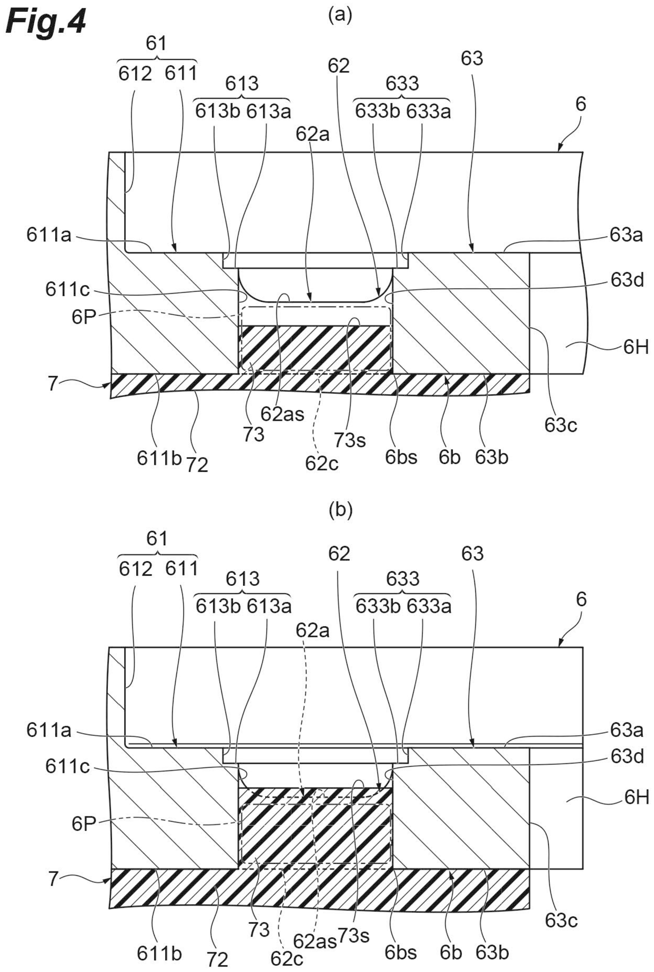

A resin part 7 is in contact with an outer peripheral annular portion rear surface 611b (refer to FIG. 4(a)). Therefore, the outer peripheral annular portion rear surface 611b constitutes a part of a heat path. The outer peripheral annular portion rear surface 611b may be defined as a part of an end plate rear surface 6b. The spokes 62 are connected to a part of the outer peripheral annular portion inner peripheral surface 611c.

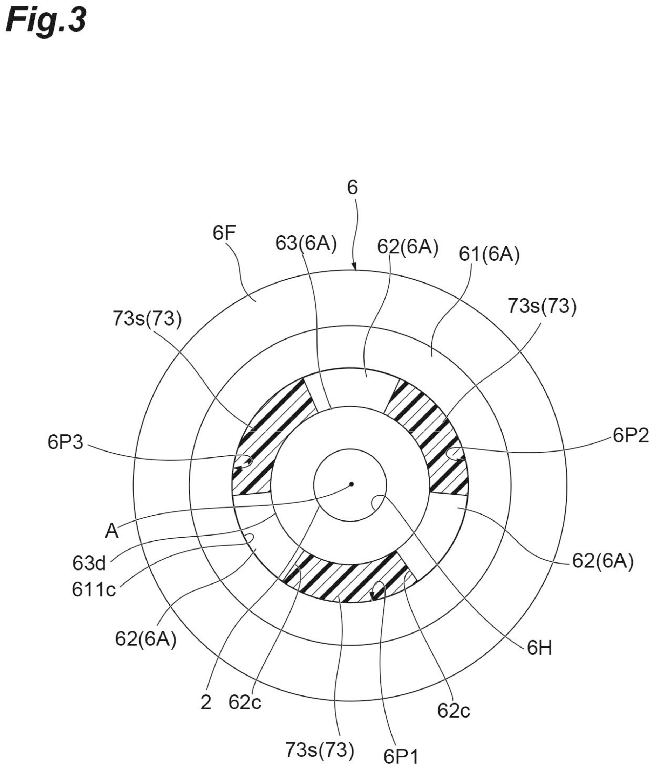

The spokes 62 connect the inner peripheral cylindrical portion 63 to the outer peripheral cylindrical portion 61. In an example shown in FIG. 3, the end plate 6 includes three spokes 62. The three spokes 62 may be disposed at equal intervals around the axis A.

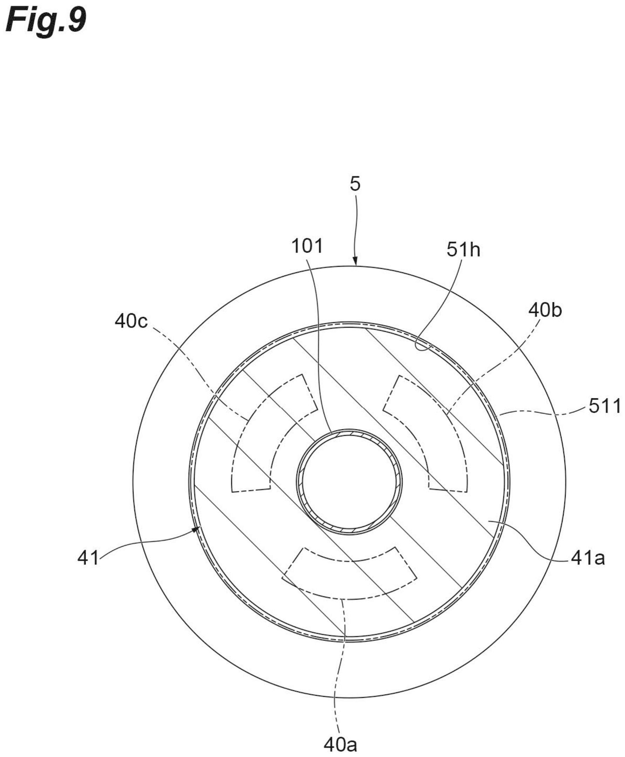

As shown in FIG. 3, spaces between the spokes 62 adjacent to each other are defined as end plate through-holes 6P1, 6P2, and 6P3. For example, the end plate through-hole 6P1 may be an opening through which a first portion 40a (refer to FIG. 9), which will be described later, can be visually recognized. Similarly, the end plate through-holes 6P2 and 6P3 may be openings through which a second portion 40b and a third portion 40c can be visually recognized, respectively.

In the example shown in FIG. 3, the end plate 6 includes three end plate through-holes 6P1, 6P2, and 6P3. The end plate through-holes 6P1, 6P2, and 6P3 can be defined as regions enclosed by a part of the outer peripheral annular portion inner peripheral surface 611c, a part of an inner peripheral cylindrical portion outer peripheral surface 63d, and spoke peripheral end surfaces 62c. Openings of the end plate through-holes 6P1, 6P2, and 6P3 that are on the end plate main surface 6a side may be defined by edges included in the spoke peripheral end surfaces 62c. The length of the end plate through-holes 6P along the axis A may be defined as a length from the end plate rear surface 6b to spoke main surfaces 62a.

As shown in FIG. 2, the spokes 62 extend from the outer peripheral annular portion inner peripheral surface 611c to the inner peripheral cylindrical portion outer peripheral surface 63d. The spoke main surfaces 62a are not so-called flush with the outer peripheral annular portion main surface 611a. For example, when comparison is performed in terms of height with respect to the spoke rear surfaces 62b, it can be found that the height of the spoke main surfaces 62a is lower than the height of the outer peripheral annular portion main surface 611a. The spoke rear surfaces 62b are flush with the outer peripheral annular portion rear surface 611b. As with the outer peripheral annular portion rear surface 611b, the spoke rear surfaces 62b are parts of the end plate rear surface 6b and constitute a part of the heat path.

The inner peripheral cylindrical portion 63 includes an inner peripheral cylindrical portion main surface 63a, an inner peripheral cylindrical portion rear surface 63b, an inner peripheral cylindrical portion inner peripheral surface 63c, and the inner peripheral cylindrical portion outer peripheral surface 63d. The bearing 21 is disposed on the inner peripheral cylindrical portion main surface 63a. The inner peripheral cylindrical portion main surface 63a is a bearing mounting surface. The inner peripheral cylindrical portion main surface 63a may be defined as a part of the end plate main surface 6a.

The inner peripheral cylindrical portion rear surface 63b is flush with the outer peripheral annular portion rear surface 611b and the spoke rear surfaces 62b. As with the outer peripheral annular portion rear surface 611b and the spoke rear surfaces 62b, the inner peripheral cylindrical portion rear surface 63b is a part of the end plate rear surface 6b and constitutes a part of the heat path. As described above, the spokes 62 are connected to a part of the inner peripheral cylindrical portion outer peripheral surface 63d. Other parts of the inner peripheral cylindrical portion outer peripheral surface 63d are surfaces that define the end plate through-holes 6P1, 6P2, and 6P3. The inner peripheral cylindrical portion inner peripheral surface 63c defines an end plate shaft insertion hole 6H through which the shaft 2 is inserted.

An inner peripheral step portion 633 is also formed at a corner portion between the inner peripheral cylindrical portion main surface 63a and the inner peripheral cylindrical portion inner peripheral surface 63c. The inner peripheral step portion 633 includes an inner peripheral step main surface 633a and an inner peripheral step outer peripheral surface 633d. The inner peripheral step main surface 633a is at a position recessed from the inner peripheral cylindrical portion main surface 63a. The outer diameter of the inner peripheral step outer peripheral surface 633d is larger than that of the inner peripheral cylindrical portion outer peripheral surface 63d. The inner peripheral step portion 633 can also be used as a portion for abutment of a masking jig in a method for manufacturing a motor, in cooperation with the outer peripheral step portion 613.

### <Resin Part>

As shown in FIG. 1, the motor 1 further includes a resin part 7. The resin part 7 is filled in the motor stator arrangement region 511 in which the motor stator 4 is disposed. The resin part 7 covers the coil 4B. More specifically, the resin part 7 covers coil ends 41 that protrude from end surfaces of the core 4A. According to such a resin part 7, the coil 4B does not come into direct contact with air. That is, the resin part 7 provides a waterproof function that protects the coil 4B from moisture, and provides a rust prevention function that suppresses the generation of rust on the coil 4B.

The resin part 7 is filled in the motor stator arrangement region 511. The resin part 7 does not fill the rotor arrangement region 311 in which the motor rotor 3 is disposed. Therefore, the resin part 7 may form a resin part inner peripheral surface 7c facing the motor rotor 3.

The resin part 7 exhibits a function as a heat path for releasing heat generated in the coil 4B to the housing 5 and the end plate 6. The resin part 7 includes a portion 71 that filled between coil end outer peripheral surfaces 41b and a housing inner peripheral surface 5c. More specifically, the portion 71 is in contact with the coil end outer peripheral surfaces 41b and is in contact with the housing inner peripheral surface 5c as well. As a result, thermal resistance from the coil ends 41 to the housing 5 is dominated by the resin part 7. In a case where a material having high thermal conductivity is used for the resin part 7, heat can be favorably released from the coil ends 41 to the housing 5.

Examples of such resin include two-component curable epoxy resin.

The resin part 7 includes a portion 72 that is filled between a coil end end surface 41a and the end plate rear surface 6b. More specifically, the portion 72 is in contact with the coil end end surface 41a and is in contact with the end plate rear surface 6b as well. As a result, as with the description made above, thermal resistance from the coil ends 41 to the end plate 6 is dominated by the resin part 7.

As shown in FIG. 4(a), the resin part 7 further includes a portion 73 that is filled in the end plate through-holes 6P. Surfaces of the resin part 7 exposed through the end plate through-holes 6P will be referred to as resin part exposed surfaces 73s. The resin part exposed surface 73s shown in FIG. 4(a) does not leak out from the end plate through-hole 6P. It will be assumed that an upper end of the end plate through-hole 6P is defined by an opening edge 62as (an opening edge on an end plate main surface side) of the spoke main surface 62a. In addition, it will be assumed that a lower end of the end plate through-hole 6P is defined by an opening edge 6bs (an opening edge on an end plate rear surface side) of the end plate rear surface 6b. According to this assumption, the resin part exposed surface 73s is positioned between the spoke main surface 62a and the end plate rear surface 6b. According to the position of the resin part exposed surface 73s, the inner peripheral cylindrical portion main surface 63a protrudes from the resin part exposed surface 73s. Therefore, the resin part 7 does not adhere to the inner peripheral cylindrical portion main surface 63a. As a result, the bearing 21 can be favorably attached to the inner peripheral cylindrical portion main surface 63a.

The position of the resin part exposed surface 73s only needs to be on the motor stator 4 side with respect to at least the inner peripheral cylindrical portion main surface 63a. For example, as shown in FIG. 4(b), the resin part exposed surface 73s may be higher than the spoke main surface 62a and may cover the spoke main surface 62a. Even in such a case, the position of the resin part exposed surface 73s is lower than the position of the outer peripheral annular portion main surface 611a and/or the inner peripheral cylindrical portion main surface 63a. Therefore, the resin part 7 does not adhere to the outer peripheral annular portion main surface 611a and/or the inner peripheral cylindrical portion main surface 63a. As a result, components such as the bearing 21 can be favorably attached to the outer peripheral annular portion main surface 611a and/or the inner peripheral cylindrical portion main surface 63a.

Next, a method for manufacturing the motor 1 will be described. The motor 1 can be manufactured by using either of two methods described below.

### <First Method for Manufacturing a Motor>

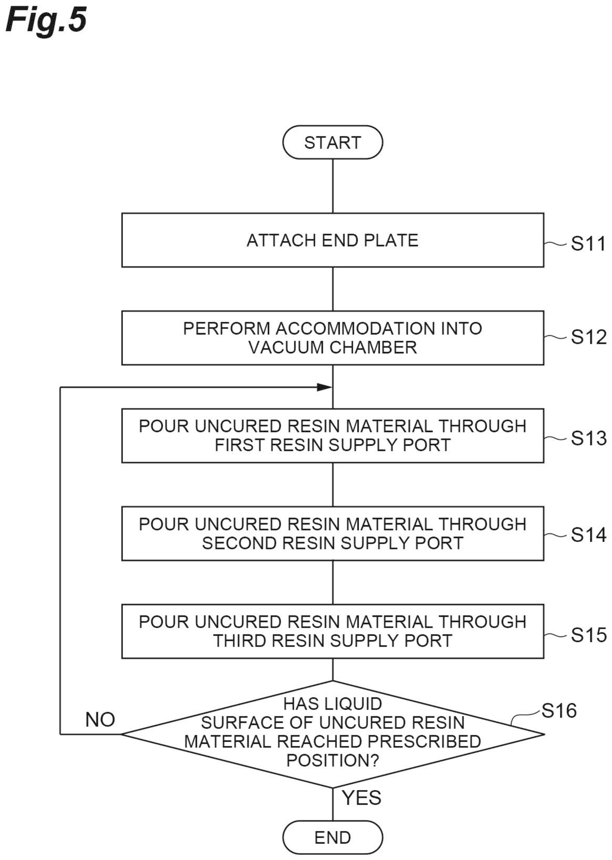

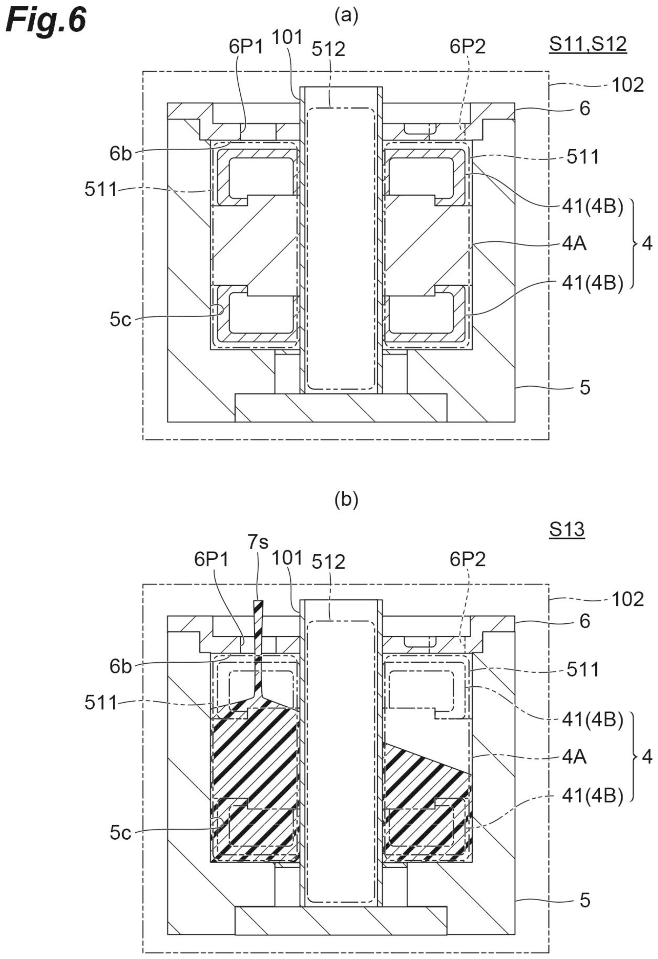

FIG. 5 is a diagram showing the main steps in a first method for manufacturing a motor. First, the motor stator 4 is disposed in the housing 5. Next, a cylindrical member 101 (refer to FIG. 6(a)) is disposed in a region corresponding to the motor rotor arrangement region 512. This is to prevent uncured resin from being filled in the motor rotor arrangement region 512 when the step of filling with the uncured resin is performed. The end plate 6 is fixed to the housing 5 (S11: refer to FIG. 6(a)). In the following description, the motor 1 that is being assembled in each of the production steps of the motor 1 will be referred to, for convenience of explanation, as a "motor assembly."

Next, the motor assembly is accommodated into a vacuum chamber 102 (S12: refer to FIG. 6(a)). In the method for manufacturing a motor according to the present embodiment, so-called vacuum filling is used to perform filling with uncured resin.

Next, uncured resin 7s is injected through the first end plate through-hole 6P1 (S13: refer to FIG. 6(b)). In this case, the motor assembly may be heated to a predetermined temperature so that the fluidity of the uncured resin 7s is maintained. After the predetermined amount of the uncured resin 7s is injected, the injecting of the uncured resin 7s is stopped.

In this case, the uncured resin 7s reaches the coil end 41 through the first end plate through-hole 6P1 and then flows to the coil end 41 on the opposite side. Meanwhile, since the viscosity of the uncured resin 7s is high, the injected uncured resin 7s requires a considerable time to enter a steady state. The "steady state" herein means that the inclined liquid surface of the uncured resin 7s is made horizontal.

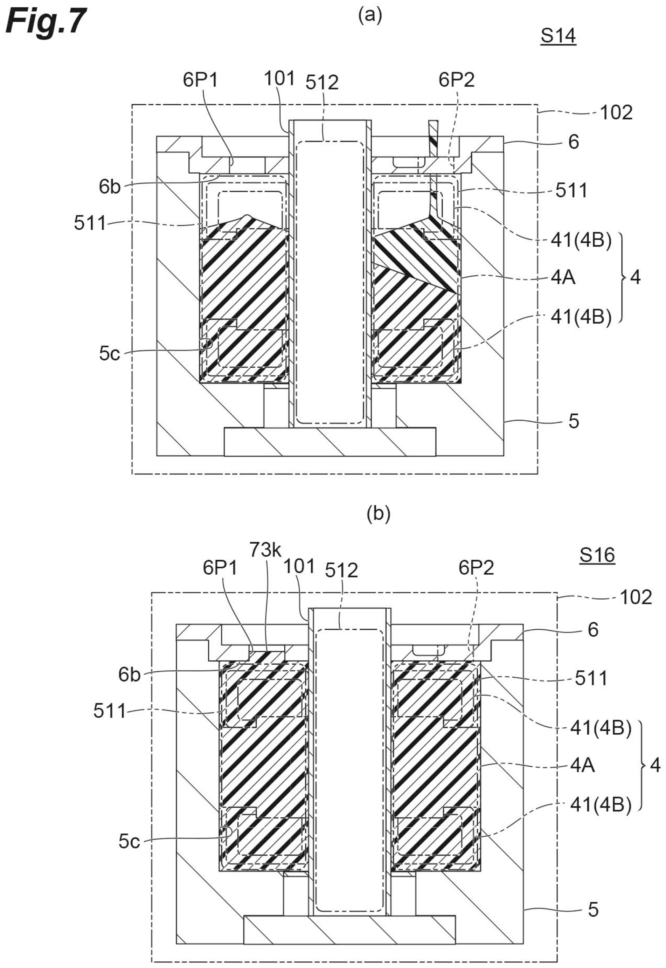

Next, before the uncured resin 7s injected through the first end plate through-hole 6P1 enters the steady state, the injecting of the uncured resin 7s is started through the second end plate through-hole 6P2 (S14: refer to FIG. 7(a)). According to step S14, a state shown in FIG. 7(a) is achieved. The uncured resin 7s injected through the second end plate through-hole 6P2 flows into a region that the uncured resin 7s injected through the first end plate through-hole 6P1 has not yet reached. Then, after a predetermined amount of the uncured resin 7s is injected, the injecting of the uncured resin 7s is stopped.

Similarly, before the uncured resin 7s injected through the second end plate through-hole 6P2 enters the steady state, the injecting of the uncured resin 7s is started through the third end plate through-hole 6P3 (S15).

After step S15, it is checked whether or not the liquid surface of the uncured resin 7s, which has been injected through each of the end plate through-holes 6P1, 6P2, and 6P3 has reached a prescribed position (S16). This check may be performed by visually observing the position of a liquid surface 73k of the uncured resin 7s through the end plate through-holes 6P1, 6P2, and 6P3. For example, it may be determined that the liquid surface 73k of the uncured resin 7s has reached the prescribed position on a condition that the liquid surface 73k of the uncured resin 7s has reached each of the end plate through-holes 6P1, 6P2, and 6P3 as shown in FIG. 7(b).

In a case where it is determined that the liquid surface 73k of the uncured resin 7s has reached the prescribed position, the injecting of the uncured resin 7s is ended. Then, the motor assembly is heated at a predetermined temperature. As a result, the uncured resin 7s becomes the solidified resin part 7. Thereafter, a step of attaching the motor rotor 3 and the bearing 21 is performed to obtain the motor 1.

In a case where it is not determined that the liquid surface 73k of the uncured resin 7s has reached the prescribed position, the uncured resin 7s is injected again through the first end plate through-hole 6P1 (S13).

Whether or not the liquid surface 73k of the uncured resin 7s has reached the prescribed position may be constantly checked during each of steps S13 to S15 in which the uncured resin 7s is injected. In addition, in a case where it is determined that the liquid surface 73k of the uncured resin 7s has reached the prescribed position, the process may proceed to the next production step after the repetition of steps S13 to S15 in which the uncured resin 7s is injected is stopped.

According to the first method for manufacturing a motor, the uncured resin 7s is injected until it is confirmed that the liquid surface of the uncured resin 7s has reached each of the end plate through-holes 6P1, 6P2, and 6P3. The expression "the uncured resin 7s has reached the end plate through-holes 6P1, 6P2, and 6P3" means that filling with the uncured resin 7s has been performed to such a degree that the uncured resin 7s comes into contact with the end plate rear surface 6b. Therefore, the resin part 7 can be reliably formed between the coil end 41 and the end plate rear surface 6b.

### <Second Method for Manufacturing a Motor>

In the first method for manufacturing a motor, an uncured resin 7s is injected (S13, S14, S15) after the end plate 6 is attached to the housing 5 (S11). In a second method for manufacturing a motor, the end plate 6 is attached after the uncured resin 7s is injected.

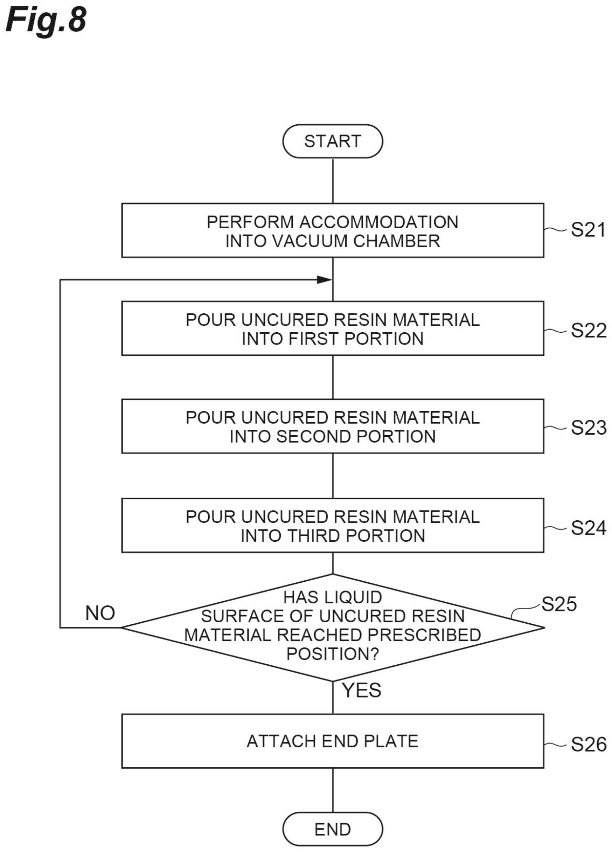

FIG. 8 is a diagram showing the main steps included in the second method for manufacturing a motor. First, the motor stator 4 is disposed in the housing 5. Next, the cylindrical member 101 is disposed in a region corresponding to the rotor arrangement region 311. Then, the motor assembly is accommodated into the vacuum chamber 102 (S21). In this case, the end plate 6 is not attached to the motor assembly.

Next, the uncured resin 7s is injected into the first portion 40a (refer to FIG. 9) (S22). The first portion 40a is any portion in the motor stator arrangement region 511 exposed through the housing opening 51h (refer to FIG. 9). Then, after a predetermined amount of the uncured resin 7s is injected, the injecting of the uncured resin 7s is stopped.

Next, the uncured resin 7s is injected into a second portion 40b (refer to FIG. 9) (S23). The second portion 40b is any portion in the motor stator arrangement region 511 exposed through the housing opening 51h and is a portion different from the first portion 40a. Then, after a predetermined amount of the uncured resin 7s is injected, the injecting of the uncured resin 7s is stopped.

Then, the uncured resin 7s is injected into a third portion 40c (refer to FIG. 9) (S24). The third portion 40c is any portion in the motor stator arrangement region 511 exposed through the housing opening 51h and is a portion different from the first portion 40a and the second portion 40b. Then, after a predetermined amount of the uncured resin 7s is injected, the injecting of the uncured resin 7s is stopped.

Note that in the above description, the injecting of the uncured resin 7s is stopped after the predetermined amount of the uncured resin 7s is injected into each portion in steps S22, S23, and S24. For example, the process may proceed to step S23 without stopping of the injecting of the uncured resin 7s in step S22. For example, the motor assembly may be rotated by a predetermined angle while the uncured resin 7s from a supply device is being injected so that the position of injecting from the supply device is changed from the first portion 40a to the second portion 40b. The supply device of the uncured resin 7s may be moved in a state where the motor assembly is fixed so that the position of injecting is changed from the first portion 40a to the second portion 40b.

After step S24, it is checked whether or not the liquid surface of the uncured resin 7s has reached the prescribed position (S25). This check may be made by visually observing the position of the liquid surface of the resin through the housing opening 51h.

In a case where it is determined that the liquid surface of the uncured resin 7s has reached the prescribed position, the injecting of the uncured resin 7s is ended. Then, the motor assembly is extracted from the vacuum chamber 102. Next, the end plate 6 is fixed to the housing 5 (S26). In this case, the uncured resin 7s has reached the opening recess 51ha of the housing 5. In addition, in a case where the end plate 6 is attached to the housing opening 51h, the uncured resin 7s that has reached the opening recess 51ha flows into the end plate through-holes 6P1, 6P2, and 6P3 in response to the pressure received from the end plate 6. The pressure received by the uncured resin 7s is generated because the end plate rear surface 6b is in contact with the uncured resin 7s. That is, when the end plate 6 is attached, the fact that the uncured resin 7s flows into the end plate through-holes 6P1, 6P2, and 6P3 means that there is no gap between the end plate rear surface 6b and the uncured resin 7s. In other words, the end plate rear surface 6b is in contact with the uncured resin 7s. Then, the motor assembly is heated at a predetermined temperature. Thereafter, the step of attaching the motor rotor 3 and the bearing 21 is performed to obtain the motor 1.

In a case where it is not determined that the liquid surface of the uncured resin 7s has reached the prescribed position, the resin is injected again from the first portion 40a (S22).

Similarly to the first method for manufacturing a motor, it may always be checked during each of steps S22, S23, and S24 in which the uncured resin is injected.

### <Actions and Effects>

The background and problems of a method for manufacturing a motor in the related art will be described. Thereafter, the actions and effects of a method for manufacturing a motor and a motor of the present disclosure will be described.

A motor stator includes a resin part encapsulating the entire motor assembly including a core and a wound coil, for the purpose of ensuring waterproofing and rust prevention of the coil. Furthermore, for a motor aiming at a high output density, a structure may be adopted in which resin having high thermal conductivity is used and a gap between a stator and a motor housing provided with a water-cooling structure is filled with the resin so that heat generated by a coil is efficiently transferred to a core or a case. The resin is caused to flow into an opening of the case after the case and the stator are assembled. Then, the temperature of the case as a whole is raised so that the resin is cured. Two-component curable epoxy resin is used as the resin in many cases.

Examples of a method of providing the opening include a step of injecting resin before an end plate on one side is mounted and mounting the end plate after the injected resin is cured. In addition, the examples of a method of providing the opening also include a method of forming a hole in the end plate beforehand.

Since the end plate is mounted after the cast resin is cured, a gap is formed between the liquid surface of the cured resin and the end plate. In the case of an electric supercharger, it is necessary to use a resin having high thermal conductivity. However, such resin has extremely high viscosity and is likely to include air bubbles when the resin is injected. Therefore, casting is performed in a vacuum chamber in order to minimize defects after curing. As a result, the liquid surface is foaming during casting of the resin. Therefore, it is difficult to strictly manage the injecting height. Therefore, it is necessary to provide a predetermined gap (at least 2 to 3 mm) between the end plate and the cured resin. In addition, it is necessary to secure a static settling time (a liquid surface leveling time) for making the liquid surface even, and thus the casting requires an extremely long time. For this reason, there is a problem in which a high-viscosity resin cannot be adopted. In a case where a gap is present between the cured resin and the end plate, water after condensation may accumulate in the gap. In addition, there is a case where a defect such as a decrease in insulation occurs due to penetration of water. There is also a case where heat of the coil cannot be extracted from an end surface, which results in a disadvantage in performance.

In consideration of the above-described background and problems, the steps and the configuration as follows have been adopted for the method for manufacturing a motor and the motor of the present disclosure to solve the problems.

A first method for manufacturing the motor 1 includes an attachment step (S11) of attaching, to the housing 5 that accommodates the motor stator 4 around which the coil 4B is wound, the end plate 6 provided with the first end plate through-hole 6P1 and the second end plate through-hole 6P2, a first injection step (S13), after the attachment step (S11), of injecting uncured resin 7s into the motor rotor arrangement region 512 of the housing 5 accommodating the motor stator 4, from outside the housing 5, through the first end plate through-hole 6P1 through which a first portion 40a of the coil 4B is visually observable, and a second injection step (S14) of injecting the uncured resin 7s into the motor rotor arrangement region 512 of the housing 5, from outside the housing 5, through the second end plate through-hole 6P2 through which a second portion 40b of the coil 4B, different from the first portion 40a, is visually observable.

In the case of the first method for manufacturing the motor 1, the uncured resin 7s is injected after the end plate 6 is attached. Then, the uncured resin 7s is injected into the motor rotor arrangement region 512 through the step (S13) of injecting the uncured resin 7s through the first end plate through-hole 6P1 and the step (S14) of injecting the uncured resin 7s through the second end plate through-hole 6P2 different from the first end plate through-hole 6P1. In this case, a time required for the uncured resin 7s to reach throughout the motor rotor arrangement region 512 can be shortened in comparison with a case where the uncured resin 7s is injected at one position. Therefore, even in the case of the high-viscosity resin part 7 having high thermal conductivity, a time required to reach throughout the motor rotor arrangement region 512 can be shortened. As a result, the motor 1 from which heat is easily released to the outside can be produced in a short time.

In the first method for manufacturing the motor 1, the first injection step (S13) and the second injection step (S14) are repeated so that the uncured resin 7s is exposed through the first end plate through-hole 6P1 and the second end plate through-hole 6P2. When the uncured resin 7s is in a state of being exposed through the first end plate through-hole 6P1 and the second end plate through-hole 6P2, the uncured resin 7s is in a state of being in contact with the end plate rear surface 6b. Therefore, it is possible to reliably form a path for transfer of heat from the coil 4B to the end plate 6 via the resin part 7.

In short, in the method for manufacturing a motor, a plurality of openings are provided in the end plate 6. As described above, the number of the openings depends on the size of the motor 1, but may be about three. After injecting the uncured resin 7s through the first end plate through-hole 6P1, by injecting the uncured resin 7s through the next, second end plate through-hole 6P2 during the liquid surface leveling time, the leveling time can be reduced. Therefore, the efficiency of manufacturing the motor is improved.

In the case of the method for manufacturing a motor, it is possible to perform filling with a high-viscosity resin without gaps while maintaining a realistic takt time. The size of the end plate through-holes 6P, which are openings, can be made smaller. Therefore, it is possible to maintain the mounting rigidity of the bearing housing provided at the end plate 6 and the heat dissipation capability from the end plate 6 side.

In a case where the uncured resin 7s is injected through the first end plate through-hole 6P1, the liquid surface 73k of the uncured resin 7s is leveled toward the second end plate through-hole 6P2 and the third end plate through-hole 6P3. Next, the uncured resin 7s is injected through the second end plate through-hole 6P2 when the liquid surface 73k becomes unbalanced. It is possible to perform liquid casting while keeping the liquid surface 73k uniform by repeating such a process. It is possible to reduce the risk of overflowing of the uncured resin 7s by minimizing the time for which the uncured resin 7s is dropped onto the spokes 62 connecting the end plate through-holes 6P.

A second method for manufacturing the motor 1 includes a injection step (S22, S23, and S24) in which uncured resin 7s is injected, through an opening of the housing 5 that accommodates the motor stator 4 around which the coil 4B is wound, into mutually different first portion 40a, second portion 40b, and third portion 40c in the motor rotor arrangement region 512 of the housing 5, and an attachment step (S26) in which, after the injection step (S22, S23, and S24), an end plate 6 provided with a first end plate through-hole 6P1 and a second end plate through-hole 6P2 is attached. In the step (S28) of attaching the end plate 6, by pressing the end plate 6 against the liquid surface of the uncured resin 7s, the uncured resin 7s is exposed from the first end plate through-hole 6P1 and/or the second end plate through-hole 6P2.

In the second method for manufacturing the motor 1, the uncured resin 7s is injected into the motor rotor arrangement region 512 at a plurality of positions different from each other (S22, S23, and S24). Therefore, a time required for the uncured resin 7s to reach throughout the motor rotor arrangement region 512 can be shortened in comparison with a case where the uncured resin 7s is injected at one position. The end plate 6 is attached after the uncured resin 7s is injected (S26). When the end plate 6 is attached, the end plate 6 is pressed against the liquid surface 73k of the uncured resin 7s so that the uncured resin 7s is exposed through the first end plate through-hole 6P1 and the second end plate through-hole 6P2. The uncured resin 7s exposed through the first end plate through-hole 6P1 and the second end plate through-hole 6P2 by being pressed by the end plate 6 means that the end plate rear surface 6b is in contact with the uncured resin 7s. Therefore, the motor 1 which easily releases heat to the outside can be produced in a short time.

In the injection step (S22, S23, and S24) of the second method for manufacturing the motor 1, the uncured resin 7s is continuously injected while the housing 5 and a device for supplying the uncured resin 7s are being relatively rotated around the axis A of the housing 5. According to such a step as well, a time required for the uncured resin 7s to reach throughout the motor rotor arrangement region 512 can be shortened.

The injection step (S22, S23, S24) of the second method for manufacturing the motor 1 includes a step (S22) of injecting a predetermined amount of the uncured resin 7s into the first portion 40a of the coil 4B and a step (S23) of injecting a predetermined amount of the uncured resin 7s into the second portion 40b of the coil 4B, which is different from the first portion 40a. According to such a step as well, a time required for the uncured resin 7s to reach throughout the motor rotor arrangement region 512 can be shortened.

The motor 1 includes the motor stator 4 around which the coil 4B is wound, the motor rotor 3 which is enclosed by the motor stator 4 and rotates together with a shaft, the housing 5 which receives the motor stator 4 and the motor rotor 3 through the housing opening 51h and forms the motor rotor arrangement region 512 for accommodating the received motor stator 4, the end plate 6 attached to the housing opening 5h, and the resin part 7 filled in the motor rotor arrangement region 512. The resin part 7 is in contact with the coil 4B and is in contact with the end plate 6, and the end plate 6 includes a plurality of the end plate through-holes 6P through which the resin part 7 is exposed.

The resin part 7 of the motor 1 is in contact with the coil 4B and is in contact with the end plate 6. According to such a configuration, it is possible to reliably form a path for transfer of heat from the coil 4B to the end plate 6 via the resin part 7. As a result, heat can be preferably released to the outside.

In the motor 1, the resin part exposed surface 73s exposed through the plurality of end plate through-holes 6P is positioned between the opening edge 6bs on the end plate rear surface 6b side and the opening edge 62as on the end plate main surface 6a side. According to such a configuration, it is possible to achieve a structure in which the resin part 7 is reliably in contact with the end plate rear surface 6b.

The end plate 6 of the motor 1 includes the annular inner peripheral cylindrical portion 63 including the end plate shaft insertion hole 6H through which the shaft 2 is inserted, the annular outer peripheral cylindrical portion 61 surrounding the inner peripheral cylindrical portion 63 in a circumferential direction and having an inner diameter larger than an outer diameter of the inner peripheral cylindrical portion 63, and a plurality of spokes 62 disposed at intervals around the axis A of the shaft 2 to connect the inner peripheral cylindrical portion outer peripheral surface 63d of the inner peripheral cylindrical portion 63 to the outer peripheral annular portion inner peripheral surface 611c of the outer peripheral cylindrical portion 61. Each of the plurality of end plate through-holes 6P is a region interposed between a pair of the spokes 62 adjacent to each other around the axis A of the shaft 2. An end surface of the inner peripheral cylindrical portion 63 protrudes from the spokes 62 along an axial direction of the shaft 2. According to such a structure, it is possible to suppress adhesion of the uncured resin 7s to the end surface of the inner peripheral cylindrical portion 63 and thus it is possible to use the end surface of the inner peripheral cylindrical portion 63 as an installation surface for a component.

In short, each of the plurality of end plate through-holes 6P is configured by the spokes 62. Each of the plurality of end plate through-holes 6P may be connected by a groove one-step lower than an installation surface for other components so that the resin portion 7 may adhere thereto. Examples of the installation surface for other components are the outer peripheral annular portion main surface 611a and the inner peripheral cylindrical portion main surface 63a. Furthermore, a dedicated surface for contact with a masking jig may be provided so that the liquid surface 73k of the uncured resin 7s in a foamed state does not adhere to the installation surface for other components. Examples of the specific surface for contact with the masking jig are the outer peripheral step portion 613 and the inner peripheral step portion 633.

The number of openings provided in the end plate 6 may be plural. The resin part 7 may be formed of mutually different kinds of resin materials. For example, casting is performed by means of a resin having high thermal conductivity until the coil 4B is hidden. Thereafter, casting may be performed by means of resin having low viscosity and medium thermal conductivity in the vicinity of the end plate 6. According to such a configuration, both control of the liquid surface 73k and thermal conductivity can be achieved. After casting resin without mounting the end plate, the end plate may be mounted before the resin is cured.

### <Modification Example>

Hereinabove, examples of the method for manufacturing a motor and the motor have been described. The method for manufacturing a motor and the motor are not limited to the above-described examples and may be implemented in various forms.

### Reference Signs List

1: motor
2: shaft
3: motor rotor (rotor)
4: motor stator (stator)
4A: core
4B: coil
5: housing
6: end plate
6a: end plate main surface
6b: end plate rear surface
6P1: first end plate through-hole
6P2: second end plate through-hole
6P3: third end plate through-hole
62as: opening edge on end plate main surface side
6bs: opening edge on end plate rear surface side
7: resin part
51h: housing opening
61: outer peripheral cylindrical portion
62: spoke (connecting portion)
63: inner peripheral cylindrical portion
73s: resin part exposed surface (exposed surface of resin part)
A: axis

## Claims

1. A method for manufacturing a motor comprising:
an attachment step of attaching, to a housing accommodating a stator around which a coil is wound, an end plate provided with a first end plate through-hole and a second end plate through-hole;
a first injection step of injecting, after the attachment step, uncured resin into a stator arrangement region of the housing accommodating the stator through the first end plate through-hole through which a first portion of the coil is visually observable from an outside of the housing; and
a second injection step of injecting the uncured resin into the stator arrangement region of the housing through the second end plate through-hole through which a second portion of the coil, which is different from the first portion, is visually observable from the outside of the housing.

2. The method for manufacturing a motor according to Claim 1,
wherein the first injection step and the second injection step are repeated so that the uncured resin is exposed through the first end plate through-hole and/or the second end plate through-hole.

3. A method for manufacturing a motor comprising:
an injection step of injecting, through an opening of a housing accommodating a stator around which a coil is wound, uncured resin into a plurality of different portions in a stator arrangement region of the housing; and
an attachment step of attaching an end plate provided with a first end plate through-hole and a second end plate through-hole after the injection step,
wherein, in the step of attaching the end plate, the end plate is pressed against a liquid surface of the uncured resin so that the uncured resin is exposed through the first end plate through-hole and/or the second end plate through-hole.

4. The method for manufacturing a motor according to Claim 3,
wherein, in the injection step, the uncured resin is continuously injected while the housing and a device supplying the uncured resin are relatively rotated around an axis of the housing.

5. The method for manufacturing a motor according to Claim 3,
wherein the injection step includes
a step of injecting a predetermined amount of the uncured resin into a first portion of the coil, and
a step of injecting a predetermined amount of the uncured resin into a second portion of the coil, the second portion being different from the first portion.

6. A motor comprising:
a stator around which a coil is wound;
a rotor enclosed by the stator and rotating together with a shaft;
a housing which receives the stator and the rotor through a housing opening and forms a stator arrangement region for accommodating the received stator;
an end plate attached to the housing opening; and
a resin part filled in the stator arrangement region,
wherein the resin part is in contact with the coil and is in contact with the end plate, and
the end plate includes a plurality of end plate through-holes through which the resin part is exposed.

7. The motor according to Claim 6,
wherein an exposed surface of the resin part exposed through the end plate through-holes is positioned between an opening edge on a rear surface side of the end plate and an opening edge on a main surface side of the end plate.

8. The motor according to Claim 6,
wherein the end plate includes
an annular inner peripheral cylindrical portion including an end plate shaft insertion hole through which the shaft is inserted,
an annular outer peripheral cylindrical portion surrounding the inner peripheral cylindrical portion in a circumferential direction and having an inner diameter larger than an outer diameter of the inner peripheral cylindrical portion, and
a plurality of connecting portions disposed at intervals around an axis of the shaft to connect an outer peripheral surface of the inner peripheral cylindrical portion to an inner peripheral surface of the outer peripheral cylindrical portion,
the end plate through-hole is a region interposed between a pair of the connecting portions adjacent to each other around the axis of the shaft, and
an end surface of the inner peripheral cylindrical portion protrudes from the connecting portions along an axial direction of the shaft.
